# EUROPEAN PATENT APPLICATION

(11) **EP 3 020 676 A1**
(43) Date of publication of application: **18.05.2016**
(21) Application number: 14822624.4
(22) Date of filing: 25.04.2014
(51) Int. Cl.: B66F 9/075, B65G 1/04

(54) **ELEVATOR DEVICE FOR HANDLING BOXES OR THE LIKE, AN ELEVATOR CRADLE PROVIDED WITH SAID ELEVATOR DEVICE AND A TRANSELEVATOR PROVIDED WITH AN ELEVATOR CRADLE OF THIS TYPE**

(30) Priority: 09.07.2013 ES 201331044
(71) Applicant: Mecalux, S.A., E-08940 Barcelona (ES)
(72) Inventor: ROSALES LOZANO, Andreu, E-08940 Cornella de Llobregat (Barcelona) (ES)
(74) Representative: Isern-Jara, Nuria
(86) International application number: PCT/ES2014/070365
(87) International publication number: WO 2015/004294

(57) **Abstract**

Elevator device for handling boxes or the like, which can be coupled to an elevator cradle of an elevator assembly that makes it possible to increase the efficiency of operation and the load capacity, comprising a pair of spaced-apart, facing frames, each one of which being provided with coupling means for fastening the same to a lifting cradle, a supporting element for supporting the box to be handled that can be moved in a guided fashion over an ascending and/or descending vertical trajectory by means of guide means, and motorized actuation means provided with a movement-transmission system, wherein the movement of the actuation means present on each of the frames is transmitted via a horizontal rotary shaft linked at one of the ends thereof to a drive means capable of working in synchrony with actuation means present on a lifting cradle.

## Description

### SPECIFICATION

### OBJECT OF THE INVENTION

The object of the present invention patent application is to register an elevator device that incorporates notable innovations and advantages.

More specifically, the invention proposes the development of an elevator device which may be assembled or adapted to conventional lifting cradles applicable to stacker cranes that, for example, have only one or two facing columns, which allows for the handling of two boxes that make up part of the same compartment of one shelf without the need for the stacker crane to move.

### BACKGROUND OF THE INVENTION

In the area of automated or smart warehouses, the use of stacker cranes is well known, such as the single mast and twin-mast cranes which perform the functions of storage at heights in a completely automated way, given their capacity to move, lift and place loads on a shelf. Such stacker cranes are therefore able to move on three coordinate axes: translation (X), elevation (Y) and extraction or placement (Z). The last movement on the (Z) axis allows the load to be placed at a normal depth or at double depth.

For these machines it is necessary to distinguish between those that are designed for storing pallets and those designed only for handling boxes, the latter having a lighter structure, allowing for a wider range of extractors, according to the type of box that needs to be moved. For cases in which more than one box is being transported, or when the load is considerably heavy, a twin-mast system would be appropriate, in which the lifting cradle rises through two columns facing one another. This way the crane is more stable.

These stacker cranes usually move on a rail flanked by shelves. The stacker cranes collect boxes stored in the corresponding shelves and carry them to the picking zone, or vice versa. This is the zone where loads or boxes are extracted from or deposited in the warehouse.

For the purposes of this specification, each movement of either extracting or depositing a load is a cycle. In this sense, the more cycles a load-handling machine can perform the more efficient it is.

However, when boxes are handled on shelves at double depth, the stacker crane's efficiency is reduced. In these cases, it is necessary to remove the front box (located in the first position of the space), in order to gain access to the box one wishes to handle or extract from the warehouse. This operation requires the stacker crane to be repositioned to place the first load in another free space. This operation is easier if the storage space on opposite side of the stacker crane's position is free. In these cases, given that the stacker crane can function on both sides, it is possible to place the load without needing to change the position of the stacker crane. The need to relocate the loads produces setbacks in the machine cycles and uses more of the facility's energy, since it must perform more movements and operations to handle the load or box.

To solve this problem, there is a well-known configuration in which one stacker crane is equipped with different overlapping lifting cradles. However, this requires a greater number of extractors, which implies a greater level of complexity for the stacker crane, as well as a significant increase in the costs of production and maintenance, making it necessary to find a simpler structural solution.

### DESCRIPTION OF THE INVENTION

The present invention has been developed for the purpose of providing an elevator device that is designed as a novelty within the field of application and that overcomes the aforementioned drawbacks, moreover offering other additional advantages that will become clear in light of the accompanying description below.

It is therefore the object of the present invention to provide an elevator device to handle boxes or the like, specifically to be coupled to the lifting cradle of an elevator assembly that makes it possible to increase efficiency during operations involving the handling of boxes on shelves that make up part of an automated warehouse, since it reduces the handling time as well as the number of movements that must be made by the stacker crane when it has to handle a box or load that is located behind another box or load that has not been requested. By reducing the number of movements during an operation cycle, energy consumption is also reduced.

Another object of the invention is to provide an elevator device that allows transport capacity to be increased, given that it will also allow a cradle to hold a greater number of boxes.

Specifically, the invention comprises a pair of spaced-apart, facing frames, each one of them being provided with coupling means for fastening the same to a lifting cradle, a supporting element for supporting the box to be handled that can be moved in a guided fashion over an ascending and/or descending vertical trajectory through guide means, and motorized actuation means provided with a transmission system, for example, comprising a series of gears, and chains linked to these gears. The movement of the actuation means present on each of the frames is transmitted via a horizontal rotary shaft linked at one of the ends thereof to drive means capable of working in synchrony with actuation means present on a lifting cradle.

Another equally important advantage of the invention is the fact that it allows for the box transportation capacity to be doubled, since its arrangement in one cradle allows for at least one box on a load area in any conventional cradle and for at least one box supported on the supporting elements in the elevator device.

According to another aspect of the invention, the guide means comprise at least one strip that extends vertically and has a longitudinal slot through which at least one bolt runs which is linked to the supporting element.

Advantageously, the longitudinal slot has a lower end inclined outwardly in such a way that it allows the supporting element (also referred to as a collector) to be removed in order to place a box on the lifting cradle by means of a relatively simple structural configuration without the need to use auxiliary elements to modify the trajectory or path of the supporting element. Otherwise, for the type of boxes that are grasped by a projecting flange arranged on the sides of the box, said box would hit the two supporting elements, preventing the proper functioning of the cradle provided with the elevator device.

Preferably, the supporting element comprises an elongated profile that extends horizontally and has at least one toothed region along its upper flange.

According to an especially preferred embodiment of the invention, the guide means have two strips for each frame that extend vertically, each one having a longitudinal slot through which at least one bolt runs which is linked the supporting element.

In accordance with another aspect of the invention, the two opposite ends of the rotary shaft have toothed gears which engage with a chain, which in turn is linked to gears coupled on the lower part of the frame.

Preferably, the bottom of each one of the strips that forms part of a respective frame includes toothed gears that engage with a movement-transmission chain, such that movement is transmitted from the drive means to the supporting element through the two strips.

Another object of the present invention is to provide a lifting cradle of the type that comprises a frame provided with a support structure that includes extraction means for the load to be handled, and which is characterized by the fact that it comprises at least one elevator device, such as the one previously described in this specification, arranged in the support structure, with said elevator device joined through the coupling means. In this sense, in the lifting cradle at least two loading or support regions may be defined to handle at least two boxes, such that one of the load regions has a relative ascending and/or descending movement with respect to the support structure.

Preferably the coupling means comprise through-holes located in each frame of the elevator device and in the support structure of the lifting cradle through which screws may be inserted.

It is also an object of the present invention to provide an elevator assembly that comprises a lifting cradle that can move vertically through vertical guide means, characterized by the fact that it comprises a cradle as described above.

Other characteristics and advantages of the elevator device, as well as the lifting cradle, object of the present invention, will become clear in light of the description of the preferred, though non-exclusive, embodiment, which, by way of a non-limiting example, is illustrated in the accompanying drawings, wherein:

### BRIEF DESCRIPTION OF THE DRAWINGS

Figure 1.- Is a perspective view of an elevator device in accordance with the present invention that includes a close-up;
Figure 2.- Is a schematic elevation view of one of the frames that form part of the elevator device;
Figure 3.- Is a detailed perspective view of one region of the elevator device shown in figure 1, indicated by a rectangle; and
Figure 4.- Is a perspective of a lifting cradle provided with a pair of elevator devices, such as the ones shown in figure 1, adjacent to each other.

### DESCRIPTION OF A PREFERRED EMBODIMENT

In light of the aforementioned figures and, in accordance with the adopted numbering, one may observe therein a preferred embodiment of the invention, which comprises the parts and elements indicated and described in detail below.

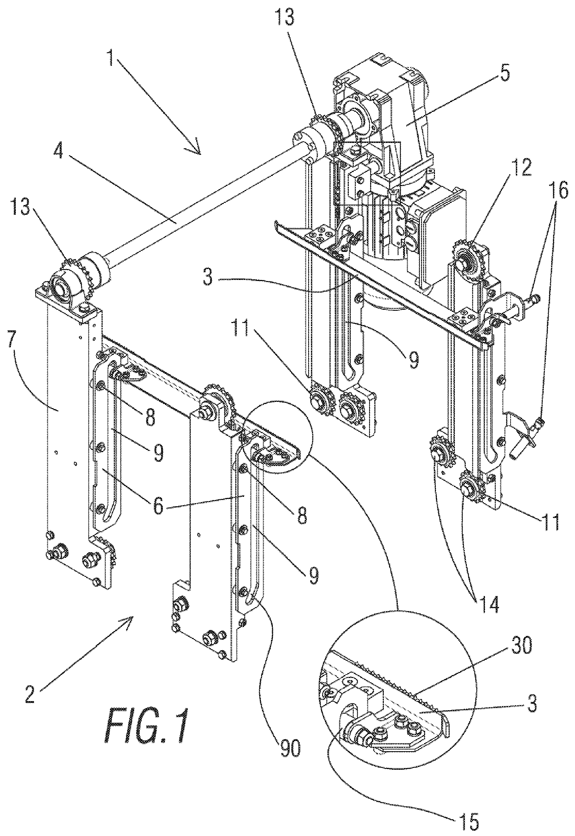

Thus, just as shown in figure 1, an elevator device for handling boxes or the like has been drawn, indicated in a general way using the reference (1), which comprises a pair of spaced-apart, facing frames (2).

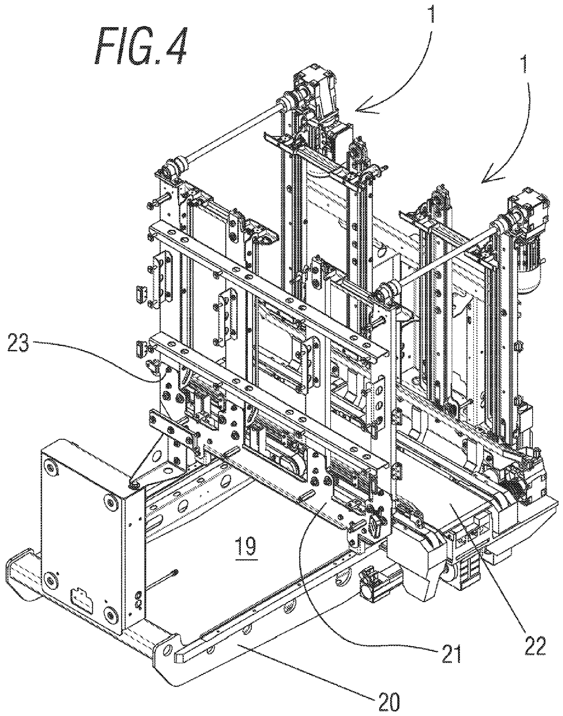

Each one of the frames (2) is provided with coupling means suitable for fastening a lifting cradle (see figure 4), as well as a supporting element (3) or collector to laterally support the box to be handled, which can move in a guided fashion either ascending or descending on a vertical trajectory through guide means that will be explained in detail further on. As can be seen, the supporting element (3) comprises an elongated profile that extends horizontally and has toothed regions (30) in two separate points which extend along a portion of the upper flange.

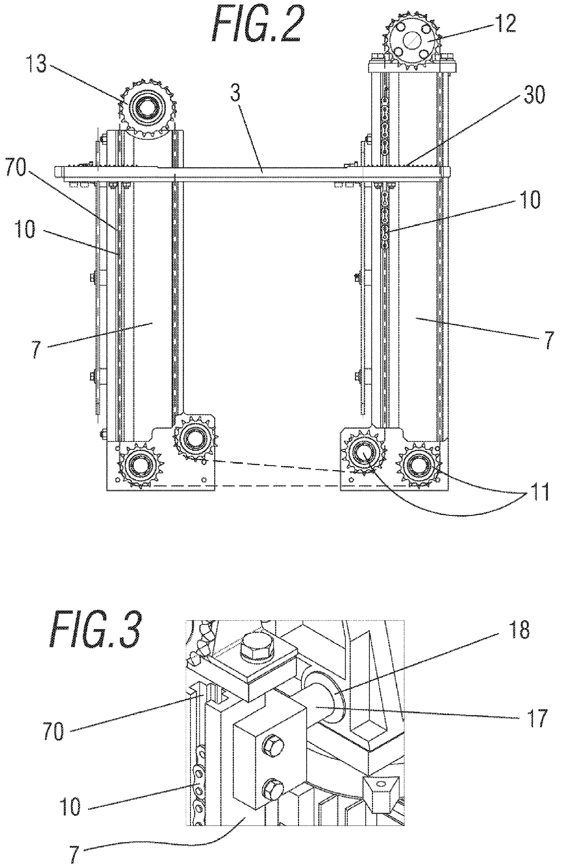

Motorized actuation means are also provided, which have a system formed by a plurality of gears linked by drive chains. One of the chains in one frame is partially shown by dashed lines in figure 2.

The movement of the actuation means in each one of the frames is transmitted through a rotary shaft (4), arranged in a horizontal plane with one of its ends linked to a gear motor located inside a casing (5) able to work synchronously with actuation means present in one lifting cradle, which will be further explained below. The electric gear motor is connected to an electronic base plate which synchronously controls and manages the motion of the electric gear motor.

In specific reference to the guide means, they comprise strips (6) that extend vertically and are supported by supporting plates (7) and fastened by screws (8) arranged in a line along the strip (6). Each one of the strips (6) includes a longitudinal slot (9) through which a bolt runs (15) that is connected to the supporting element (3).

To guarantee that the lifting device (1) functions properly, especially when it has to handle plastic boxes with flanges that laterally project from each of the four walls of the box, the longitudinal slot (9) has a lower end (90) inclined outwardly with respect to the longitudinal axis of the rest of the longitudinal slot (9).

The two opposite ends of the rotating shaft (4) have a series of toothed gears (13) they engage with and transmit movement to a chain (10), which in turn is linked to gears coupling on the lower part of the frame. More specifically, each of the two supporting plates (7) that form part of a respective frame (2) have at the bottom two gearwheels (11) and at the top one gearwheel (12), which we will call the return pinions, which engage with the chain (10) in such a way that the movement of the supporting element (3) is transmitted between the two strips (6) through the chain configuration shown in figure 2, thus ensuring that the supporting element (3) is horizontal when lifting or lowering the boxes to be handled. It must also be mentioned that the gearwheels (11) are fastened to the supporting plates (7) by means of shafts held by threading (14).

To guarantee the protection of the chains from possible impacts which could damage a section of the chain (10), the supporting plates (7) have cavities (70) that extend longitudinally along their entire length in which the drive chain (10) is housed, as can be seen clearly in figure 3.

Moreover, one of the frames (2) may include a pair of detectors (16) which can detect the height of the supporting element (3), such that they can detect the position at its highest and lowest points of the vertical trajectory of the supporting element (3) itself during operations.

Figure 3 shows a close-up of an area near the motor (5) in which one can see the torque arm (17) that is joined to a shock absorber sleeve (18) intended to reduce the impact on the gears due to possible slack, thereby extending the shelf life of the components involved with the movement of the elevator device (1).

Figure 4 shows an embodiment of a lifting cradle which is generally indicated by the reference (19), for example, suitable to be coupled to a stacker crane to conventionally handle loads (not shown), that comprises a frame (20) provided with a support structure (21) that includes extraction means for the load to be handled, which will not be further described in the present description since they are not the object of the invention. This lifting cradle (19) comprises a pair of elevator devices (1) of the same characteristics as the one shown in figure 1, that are arranged in the support structure (21).

In this sense, different load or support regions to handle at least two boxes (not shown) are defined, such that two of the load regions have a relative ascending and/or descending motion with respect to the load area (22).

Both elevator devices are joined to a lifting cradle (19) through the coupling means, which comprise a plurality of holes or drilled through-holes located in each frame of the elevator device (1), as well as in the support structure (20) of the lifting cradle (19) such that screws may be inserted (23) (screw-thread).

This lifting cradle is very suitable to be applied to the operation cycles of a stacker crane, during which it must handle boxes with different products located in the same compartment of a shelf, such that, for example, when it must retrieve a box located behind the first box (or the box farthest to the outside) of a compartment, the lifting cradle must first, with the help of extraction means, take the first box in the row. The elevator device (1) then immediately enters into operation in such a way that it grasps the box using the supporting elements (3) and lifts said box up. The lifting cradle then takes the box to be handled and places it upon a region of the cradle, such that it allows the first box to then be lowered to the height of the load area of the cradle and, using the extraction means, it once again deposits it in the compartment being handled. This way the box of a row that was not located in the front of the row can be accessed without the stacker crane needing to carry out any other movements on the three coordinate axes. It is likewise possible to transport a greater number of boxes in each movement of the stacker crane.

The details, shapes, dimensions and other accessory elements, as well as the materials used to manufacture the elevator device of the invention, may be suitably substituted for others which are technically equivalent, and do not diverge from the essential nature of the invention, nor the scope defined by the claims included below.

## Claims

1. An elevator device (1) for handling boxes or the like, in particular to be coupled to a lifting cradle of an elevator assembly, **characterized by** the fact that it comprises two spaced-apart, facing frames (2), each one of them being provided with coupling means for fastening the same to a lifting cradle, a supporting element for supporting the box to be handled that can be moved in guided fashion over an ascending and/or descending vertical trajectory through guide means, and motorized actuation means equipped with a movement-transmission system, wherein the movement of the actuation means present on each of the frames is transmitted via a horizontal rotary shaft linked at one of the ends thereof to drive means capable of working in synchrony with actuation means present on a lifting cradle.

2. The elevator device (1) according to claim 1, **characterized by** the fact that the movement-transmission system comprises a plurality of gears located in the frames and chains linked to such gears.

3. The elevator device (1) according to claim 1, **characterized by** the fact that the guide means comprise at least one strip that extends vertically and has a longitudinal slot through which at least one bolt connected to the supporting element (3) runs.

4. The elevator device (1) according to claim 3, **characterized by** the fact that the longitudinal slot has a lower end inclined outwardly.

5. The elevator device (1) according to claim 1, **characterized by** the fact that the supporting element (3) comprises an elongated profile that extends horizontally and has at least one toothed region (30) along its upper flange.

6. The elevator device (1) according to claim 1, **characterized by** the fact that for each frame (2) the guide means have two strips that extend vertically, each one having a longitudinal slot through which at least one bolt connected to the supporting element (3) runs.

7. The elevator device (1), according to claims 1 and 2, **characterized by** the fact that the two opposite ends of the rotary shaft have gearwheels which engage with a chain, which in turn is linked to gears coupled on the lower part of the frame.

8. The elevator device (1), according to claims 2 and 6, **characterized by** the fact that each one of the two strips that form part of a respective frame includes at the bottom gearwheels that engage with a movement-transmission chain, such that movement is transmitted from the drive means to the supporting element through the two strips.

9. The elevator device (1), according to claims 1 and 2, **characterized by** the fact that the frame has supporting plates (7) in which cavities are defined that extend longitudinally along their entire length and in which the transmission chain is housed.

10. The elevator device (1), according to claim 1, **characterized by** the fact that the drive means is an electric gear motor.

11. The elevator device (1), according to claim 1, **characterized by** the fact that it has the means to detect the height of the supporting element (3).

12. The elevator device (1), according to claim 11, **characterized by** the fact that the detection means comprise at least one pair of detectors located at different heights on the frame (2).

13. A lifting cradle (19) that comprises a frame equipped with a support structure that includes extraction means for the load to be handled, **characterized by** the fact that it comprises at least one elevator device (1), according to any one of claims 1 to 12, arranged in the support structure, with said elevator device joined through coupling means, such that at least two load or support regions to handle at least two boxes are defined, such that one of the load regions has a relative ascending and/or descending movement with respect to the support structure.

14. The lifting cradle (19), according to claim 13, **characterized by** the fact that the coupling means comprise through-holes located in each frame of the elevator device and in the support structure of the lifting cradle, through which screws may be inserted.

15. An elevator assembly comprising a lifting cradle (19) that can move vertically through vertical guide means, **characterized by** the fact that it comprises a lifting cradle (19) according any of claims 13 to 14.
